# EUROPEAN PATENT APPLICATION

(11) **EP 4 756 976 A1**
(43) Date of publication of application: **10.06.2026**
(21) Application number: 24866766.9
(22) Date of filing: 19.02.2024
(51) Int. Cl.: H01M 10/0587, H01M 10/052, H01M 10/0525, H01M 10/054, H01M 6/14, H01M 6/00

(54) **WINDING MEMBER ASSEMBLY, WINDING DEVICE AND WINDING METHOD**

(30) Priority: 22.09.2023 CN 202311229325
(71) Applicant: Contemporary Amperex Technology Co., Limited, Ningde, Fujian 352100 (CN)
(72) Inventor: WU, Kai, Ningde, Fujian 352100 (CN); LUO, Zhongping, Ningde, Fujian 352100 (CN); WU, Duanying, Ningde, Fujian 352100 (CN)
(74) Representative: Kraus & Lederer PartGmbB
(86) International application number: PCT/CN2024/077573
(87) International publication number: WO 2025/060339

(57) **Abstract**

Disclosed in the present application are a winding member assembly, a winding device and a winding method. The winding member assembly comprises a first winding member and second winding members, the first winding member comprising two first sub-winding members capable of moving with respect to each other in a first direction, and the second winding members being respectively arranged on the two sides of the first winding member in a second direction. In a first state, the outer peripheral walls of the second winding members and the outer peripheral walls of the first sub-winding members are located on the same preset cylindrical surface. In a second state, the second winding members are located inside the preset cylindrical surface, and at least part of each second winding member extends into accommodating chambers via corresponding mating ports, such that the width of the winding member assembly in the second direction in the second state is smaller than the width of the winding member assembly in the second direction in the first state.

## Description

### CROSS-REFERENCE TO RELATED APPLICATIONS

This application is based on and claims priority to the Chinese Patent Application No. 202311229325.2 filed on September 22, 2023, which is incorporated herein by reference in its entirety.

### TECHNICAL FIELD

This application relates to the technical field of winding, and in particular, to a winding member assembly, a winding device, and a winding method.

### BACKGROUND

In the related art, for a wound electrode assembly, a winding device is typically used to wind electrode sheets and separators to form the electrode assembly. The winding device winds the electrode sheets and separators with a winding member assembly. After the winding by the winding member assembly is completed, the electrode sheets and separators are removed from the winding member assembly. Due to the lack of support, the electrode assembly can hardly maintain its original shape due to gravity, and an upper part of the electrode assembly is prone to collapse, leading to wrinkling of the electrode sheets, which affects the reliability and safety of the electrode assembly.

### SUMMARY

This application provides a winding member assembly, a winding device, and a winding method, to improve a capability of the winding material in maintaining its shape and shape stability after being removed from the winding member assembly, and reduce a probability of collapse of the winding material. When the winding material is an electrode assembly, a probability of wrinkling of electrode sheets can be reduced.

In a first aspect, embodiments of this application provide a winding member assembly, including: a first winding member, where the first winding member includes two first sub-winding members oppositely disposed along a first direction and movable relative to each other along the first direction, each of the first sub-winding members has an accommodating cavity formed inside, and the accommodating cavity penetrates two side walls of the first sub-winding member in a second direction to form fitting openings respectively; and a second winding member, where the first winding member is provided with second winding members on two sides along the second direction respectively, each of the second winding members is movable relative to the first sub-winding member, and the winding member assembly is configured to switch between a first state and a second state; where in the first state, an outer peripheral wall of the second winding member and an outer peripheral wall of the first sub-winding member are in a same preset cylindrical surface; in the second state, the second winding member is located inside the preset cylindrical surface and at least part of the second winding member extends into the accommodating cavity through the corresponding fitting opening, so that a width of the winding member assembly in the second state in the second direction is smaller than a width of the winding member assembly in the first state in the second direction; and the first direction, the second direction, and an axial direction of the winding member assembly are perpendicular to each other.

In the above technical solution, the first winding member includes two first sub-winding members oppositely disposed along the first direction and movable relative to each other along the first direction; the winding member assembly is capable of switching between the first state and the second state; and the width of the winding member assembly in the second state in the second direction is smaller than the width of the winding member assembly in the first state in the second direction. In this way, in the second state, the second winding member may no longer support a corresponding part of the winding material, and may also provide clearance for the winding material when the first winding member stretches the winding material, so that before the winding material is removed from the winding member assembly, the winding member assembly may stretch the winding material at least once, flattening the winding material, improving the capability of the winding material to maintain its shape and shape stability after the winding material is removed from the winding member assembly, reducing the probability of collapse of the winding material due to gravity and the like, improving the reliability of the winding material. Moreover, the first sub-winding member can provide a movement clearance space for the second winding member, facilitating the smooth switching of the winding member assembly between the first state and the second state, and helping save the space occupied by the winding member assembly in its axial direction. If the winding material is an electrode assembly, reliability issues such as separator folding and electrode sheet wrinkling can be alleviated, and the safety of the electrode assembly can be enhanced.

In some embodiments, in the first state, the second winding member is located outside the first sub-winding member.

In the above technical solution, the second winding member is located outside the first sub-winding member in the first state, facilitating reduction in a volume and occupied space of the second winding member to a certain extent while ensuring the support provided by the second winding member for the winding material, reducing the occupation of the internal space of the first winding member by the second winding member in the first state. In this case, when the winding member assembly switches to the second state, utilization of the internal space of the first winding member by the second winding member is facilitated. Especially when multiple second states are set and the multiple second states are the first gear to the Nth gear, the above setting appropriately facilitates increase in the number of second states.

In some embodiments, at least one of the second winding members includes two second sub-winding members spaced apart along the first direction; where in the first state, an outer peripheral wall of the second sub-winding member and an outer peripheral wall of the first sub-winding member both are in the preset cylindrical surface; and in the second state, at least part of the second sub-winding member extends into the corresponding accommodating cavity, so that the second sub-winding member is located inside the preset cylindrical surface.

In the above technical solution, at least one second winding member includes two second sub-winding members spaced apart along the first direction, so that a spacing space between the two second sub-winding members may be used as a threading space for the winding material, so as to achieve fixation of the winding material.

In some embodiments, a side wall of at least one first sub-winding member facing the other first sub-winding member is formed with an avoidance opening. The avoidance opening communicates with the accommodating cavity and the two corresponding fitting openings, suitable for avoiding the corresponding second sub-winding member.

In the above technical solution, the avoidance opening can provide avoidance for the switching movement of the second sub-winding member when the winding member assembly switches between the first state and the second state. This helps further expand the movement space provided for the second winding member when the winding member assembly switches between the first state and the second state, so that the spacing between the two second sub-winding members in the first direction can be appropriately reduced to a certain extent, to adaptively increase the proportion of the outer peripheral wall of the second sub-winding member on the preset cylindrical surface in the circumferential direction of the winding member assembly, thereby increasing the support range of the outer peripheral wall of the second winding member for the winding material in the circumferential direction in the first state.

In some embodiments, a partition is provided in the accommodating cavity; the partition is connected to two opposite side walls of the accommodating cavity, to divide the accommodating cavity into two chambers arranged in sequence along the second direction; and the two chambers correspond to the two second winding members respectively.

In the above technical solution, the partition is provided in the accommodating cavity to divide the accommodating cavity into the two chambers. In this way, while the accommodating requirement of the second winding member in the second state is satisfied, the structural stability of the accommodating cavity is improved, and the structural reliability of the winding member assembly is improved.

In some embodiments, the winding member assembly has a centerline extending along the second direction; the two first sub-winding members are disposed on two sides of the centerline in the first direction respectively; and/or the two second sub-winding members of at least one of the second winding members are disposed on the two sides of the centerline in the first direction respectively.

In the above technical solution, disposing the two first sub-winding members on the two sides of the centerline in the first direction respectively, and/or disposing the two second sub-winding members of the second winding member on the two sides of the centerline in the first direction respectively can allow an opposite or staggered arrangement of a spacing region between the two first sub-winding members and a spacing region between the two second sub-winding members of the second winding member, so that the winding material can be threaded through the spacing region between the two second sub-winding members to the spacing region between the two first sub-winding members, facilitating subsequent clamping or continued threading.

In some embodiments, the winding member assembly further includes two oppositely disposed clamping pieces, where the two clamping pieces are movable relative to each other to clamp the winding material, and the two clamping pieces are disposed correspondingly on the two first sub-winding members respectively.

In the above technical solution, the clamping pieces are provided, and then the winding material can be clamped by the clamping pieces to achieve fixation of the winding material, thereby achieving winding of the winding material on the outer peripheral wall of the winding member assembly. In addition, since the clamping pieces are provided, during clamping and fixation of the winding material, a position of the first sub-winding member can remain unchanged, that is, the position of the first sub-winding member is relatively fixed, so that the preset cylindrical surface is relatively fixed in the first state. This helps lower the position requirements for the second winding member in the first state and second state; and during the winding, the position of the first sub-winding member does not need to be adjusted, helping simplify the winding steps of the winding member assembly.

In some embodiments, outer peripheral walls of the two first sub-winding members are disposed in opposite directions, an outer peripheral wall of each of the first sub-winding members is formed with a groove, grooves of the two first sub-winding members are disposed in opposite directions along a radial direction of the winding member assembly.

In the above technical solution, the groove is provided on the outer peripheral wall of each first sub-winding member, to provide an insertion space with the unloading assembly, so as to separate the winding material from the winding member assembly for the next process; further, since the two grooves are disposed in opposite directions along the radial direction of the winding member assembly, the two unloading assemblies may be oppositely disposed along the radial direction, so that the winding material can be directly stretched and further flattened after the winding material is removed, balancing the force on the winding material, reducing the risk of deformation of the winding material.

In some embodiments, the second winding member moves in a cross-section of the winding member assembly to switch the winding member assembly between the first state and the second state.

In the above technical solution, the second winding member is configured to move in the cross-section of the winding member assembly to switch the winding member assembly between the first state and the second state. This can reduce the movement space required for the second winding member during the above state switching, saving the space occupied by the winding member assembly during operation.

In some embodiments, at least one of the second winding members is movable relative to the first winding member along the second direction.

In the above technical solution, at least one second winding member is configured as movable relative to the first winding member along the second direction. This simplifies the movement of the at least one second winding member 2, and further reduces the movement space required for the at least one second winding member 2 during the switching of the winding member assembly between the first state and the second state.

In some embodiments, multiple second states from a first gear to an Nth gear are set; and from the first gear to the Nth gear, the width of the winding member assembly in the second direction decreases.

In the above technical solution, the multiple second states from the first gear to the Nth gear are set, and from the first gear to the Nth gear, the width of the winding member assembly in the second direction decreases. In this case, while the shape stability of the winding material after being removed from the winding member assembly is improved, different requirements on the number of stretches, flatness degree, and the like for different winding materials can be adaptively satisfied.

In a second aspect, embodiments of this application provide a winding device, including the above winding member assembly, a first driving mechanism, and a second driving mechanism, where the first driving mechanism is configured to drive the winding member assembly to rotate around a central axis of the winding member assembly; and the second driving mechanism is configured to drive at least one of the first sub-winding members to move along the first direction.

In the above technical solution, since the winding device adopts the above winding member assembly, and the winding member assembly can improve a capability of the winding material to maintain its shape and shape stability after being removed from the winding member assembly, the winding device can reduce a probability of collapse of the winding material and improve the use reliability of the winding material; and if the winding material is an electrode assembly, reliability issues such as separator folding and electrode sheet wrinkling can be alleviated, enhancing safety of the electrode assembly.

In some embodiments, in the first state, the second winding member is located outside the first sub-winding member; and the winding device further includes a third driving mechanism, where the third driving mechanism is configured to drive the second winding member to move relative to the first winding member along the second direction, to switch the winding member assembly between the first state and the second state.

In the above technical solution, the movement of the second winding member is simple, which can further reduce the movement space required for the second winding member during the switching of the winding member assembly between the first state and the second state.

In a third aspect, embodiments of this application provide a winding method. A winding member assembly includes a first winding member and a second winding member, the first winding member includes two first sub-winding members oppositely disposed along a first direction and movable relative to each other along the first direction, each of the first sub-winding members has an accommodating cavity formed inside, the accommodating cavity penetrates two side walls of the first sub-winding member in a second direction to form fitting openings respectively, the first winding member is provided with second winding members on two sides along the second direction respectively, each of the second winding members is movable relative to the first sub-winding member, and the winding member assembly is configured to switch between a first state and a second state; in the first state, an outer peripheral wall of the second winding member and an outer peripheral wall of the first sub-winding member are in a same preset cylindrical surface. In the second state, the second winding member is located inside the preset cylindrical surface and at least part of the second winding member extends into the accommodating cavity through the corresponding fitting opening, so that a width of the winding member assembly in the second state in the second direction is smaller than a width of the winding member assembly in the first state in the second direction; and the first direction, the second direction, and an axial direction of the winding member assembly are perpendicular to each other. The winding method includes: The winding member assembly winds a winding material in the first state until a preset condition is satisfied; the winding member assembly stretches the winding material at least once; and during the stretching, the winding member assembly switches to the second state and increases a distance between the two first sub-winding members in the first direction.

In the above technical solution, before removing the winding material from the winding member assembly, the winding member assembly stretches the winding material at least once, which can improve a capability of the winding material to maintain its shape and shape stability after being removed from the winding member assembly. In this way, the winding method can reduce the probability of collapse of the winding material and improve the use reliability of the winding material; and if the winding material is an electrode assembly, reliability issues such as separator folding and electrode sheet wrinkling can be alleviated, enhancing safety of the electrode assembly.

### BRIEF DESCRIPTION OF DRAWINGS

The above and/or additional aspects and advantages of this application will become apparent and easy to understand from the description of embodiments with reference to the following drawings, in which:
FIG. 1 is a schematic diagram of a winding member assembly provided in some embodiments of this application;
FIG. 2 is a schematic diagram of a first winding member and a clamping piece shown in FIG. 1;
FIG. 3 is another schematic diagram of the winding member assembly shown in FIG. 1;
FIG. 4 is another schematic diagram of the first winding member and the clamping piece shown in FIG. 2;
FIG. 5 is still another schematic diagram of the first winding member shown in FIG. 4;
FIG. 6 is a schematic diagram of winding a winding material by the winding member assembly shown in FIG. 1;
FIG. 7 is a schematic diagram of stretching a winding material by an unloading assembly provided in some embodiments of this application; and
FIG. 8 is a schematic flowchart of a winding method provided in some embodiments of this application.

Reference signs in the drawings:
winding member assembly 10; central axis L1; centerline L2; unloading assembly 20; winding material 30;
first winding member 1; first sub-winding member 11; accommodating cavity 11a; fitting opening 11b; avoidance opening 11c; mounting groove 11d; groove 11e; chamber 11f;
second winding member 2; second sub-winding member 21;
partition 3; clamping piece 4; inner clamping member 6; and outer clamping member 7.

### DETAILED DESCRIPTION OF EMBODIMENTS

To make the objectives, technical solutions, and advantages of the embodiments of this application clearer, the technical solutions in the embodiments of this application will be clearly described below with reference to the drawings in the embodiments of this application. It is clear that the described embodiments are some but not all embodiments of this application. Based on the embodiments in this application, all other embodiments obtained by those of ordinary skill in the art without creative efforts fall within the protection scope of this application.

Unless otherwise defined, all technical and scientific terms used in this application have the same meanings as commonly understood by those skilled in the technical field to which this application pertains. In this application, the terms used in the specification of this specification are only for the purpose of describing specific embodiments, and are not intended to limit this application. The terms "include" and "have" and any variations thereof in the specification and claims of this application and the above description of the drawings are intended to cover non-exclusive inclusions. The terms "first", "second" and the like in the specification and claims of this application or the above drawings are used to distinguish different objects, and are not used to describe a specific order or primary-secondary relationship.

"An embodiment" in this application means that specific features, structures, or characteristics described with reference to the embodiment can be included in at least one embodiment of this application. The appearance of the phrase in various places in the specification does not necessarily refer to the same embodiment, nor is it an independent or alternative embodiment that is mutually exclusive with other embodiments.

The term "and/or" in this application is merely an association describing associated objects, indicating that three relationships may exist, for example, A and/or B may indicate: A exists alone, both A and B exist, and B exists alone. In addition, the character "/" in this application generally indicates that the associated objects before and after are in an "or" relationship.

In the embodiments of this application, the same reference signs indicate the same components, and for brevity, detailed descriptions of the same components in different embodiments are omitted. It should be understood that terms such as thickness, length, width of various components in the embodiments of this application shown in the drawings do not constitute any limitation on this application.

"Multiple" in this application refers to two or more (including two).

In this application, the battery cell may include lithium-ion secondary battery, lithium-ion primary battery, lithium-sulfur battery, sodium-lithium ion battery, sodium-ion battery, magnesium-ion battery, or the like, and this is not limited in the embodiments of this application. The battery cell may be cylindrical, flat, rectangular, or the like, and this is not limited in the embodiments of this application. Battery cells are generally divided into three types based on packaging methods: cylindrical battery cell, prismatic battery cell, and pouch battery cell, and this is not limited in the embodiments of this application.

The battery mentioned in the embodiments of this application refers to a single physical module that includes multiple battery cells to provide higher voltage and capacity. For example, the battery mentioned in this application may be a battery module, a battery pack, or the like. A battery module generally includes multiple battery cells. A battery generally includes a box for packaging multiple battery cells or multiple battery modules, and the box can prevent liquids or other foreign objects from affecting the charge or discharge of the battery cells. Certainly, the battery may also not include a box.

For example, a battery includes multiple battery cells, and the multiple battery cells may be connected in series, in parallel, or in series-parallel, where the series-parallel connection refers to both series and parallel connections among multiple battery cells. For example, a battery cell typically may include a housing, an electrode assembly, and an electrolyte. The housing is configured to accommodate the electrode assembly and the electrolyte, and the housing is provided with at least one positive electrode pole and at least one negative electrode pole. The electrode assembly includes one or more electrode assemblies, and the electrode assembly is formed by stacking or winding a positive electrode sheet, a negative electrode sheet, and a separator.

The positive electrode sheet generally may include a positive electrode current collector and a positive electrode active material layer. The positive electrode active material layer is directly or indirectly applied to the positive electrode current collector. The positive electrode current collector not coated with the positive electrode active material layer protrudes from the positive electrode current collector coated with the positive electrode active material layer. The positive electrode current collector not coated with the positive electrode active material layer serves as a positive electrode tab sheet, and multiple positive electrode tab sheets are stacked together to establish an electrical connection with the positive electrode pole. For example, the multiple positive electrode tab sheets stacked together may be directly welded to the positive electrode pole to establish an electrical connection; or a battery cell assembly may further include a positive electrode adapting piece, the multiple positive electrode tab sheets stacked together are welded to one end of the positive electrode adapting piece, and another end of the positive electrode adapting piece is welded to the positive electrode pole, so that the positive electrode tab sheets establish an electrical connection with the positive electrode pole.

The negative electrode sheet generally may include a negative electrode current collector and a negative electrode active material layer. The negative electrode active material layer is directly or indirectly applied to the negative electrode current collector. The negative electrode current collector not coated with the negative electrode active material layer protrudes from the negative electrode current collector coated with the negative electrode active material layer. The negative electrode current collector not coated with the negative electrode active material layer serves as a negative electrode tab sheet, and multiple negative electrode tab sheets are stacked together to establish an electrical connection with the negative electrode pole. For example, the multiple negative electrode tab sheets stacked together may be directly welded to the negative electrode pole to establish an electrical connection; or the battery cell assembly may further include a negative electrode adapting piece, the multiple negative electrode tab sheets stacked together are welded to one end of the negative electrode adapting piece, and another end of the negative electrode adapting piece is welded to the negative electrode pole, so that the negative electrode tab sheets establish an electrical connection with the negative electrode pole. A material of the separator is not limited, for example, may be polypropylene, polyethylene, or the like.

In the related art, for a wound electrode assembly, a winding device is typically used to wind electrode sheets and a separator to form an electrode assembly. Typically, the winding device uses a winding member assembly to wind the electrode sheets and separator. After the winding by the winding member assembly is completed, the electrode sheets and separator are removed from the winding member assembly and stretched by an unloading assembly to adjust their shapes. For example, a substantially cylindrical electrode assembly tends to be flat after stretching, facilitating a subsequent shaping process.

However, after the electrode sheets and separator are removed from the winding member assembly, due to the lack of support, an electrode assembly with a relatively small winding width can basically maintain its shape unchanged after being removed. For example, an electrode assembly with a relatively small diameter can basically maintain a cylindrical shape after being removed from the winding member assembly. For an electrode assembly with a relatively large winding width, since the electrode assembly is mostly suspended and only clamped by the unloading assembly after removal, before the unloading assembly stretches the electrode assembly, the electrode assembly can hardly maintain its original shape due to the gravity, and an upper part of the electrode assembly is prone to collapse, affecting subsequent shaping processes; further, the collapse of the electrode assembly is prone to cause problems such as separator folding and electrode sheet wrinkling, affecting the reliability of the electrode assembly. For example, for an electrode assembly with a relatively large diameter (for example, a diameter greater than 400 mm) removed from the winding member assembly, a suspended part is prone to sag downward under the action of gravity, and therefore maintaining the original cylindrical shape is difficult.

In view of this, a winding member assembly is proposed to help an electrode assembly maintain an original shape after being removed from the winding member assembly. The winding member assembly includes a first winding member and a second winding member. The first winding member includes two first sub-winding members oppositely disposed along a first direction and movable relative to each other along the first direction. Each of the first sub-winding members has an accommodating cavity formed inside. The accommodating cavity penetrates two side walls of the first sub-winding member in a second direction to form fitting openings respectively. The first winding member is provided with second winding members on the two sides along the second direction respectively. Each second winding member is movable relative to the first sub-winding member. The winding member assembly is configured to be capable of switching between a first state and a second state. In the first state, an outer peripheral wall of the second winding member and an outer peripheral wall of the first sub-winding member are in a same preset cylindrical surface. In the second state, the second winding member is located inside the preset cylindrical surface and at least part of the second winding member extends into the accommodating cavity through the corresponding fitting opening, so that a width of the winding member assembly in the second state in the second direction is smaller than a width of the winding member assembly in the first state in the second direction. The first direction, the second direction, and an axial direction of the winding member assembly are perpendicular to each other.

In the above technical solution, the first winding member includes two first sub-winding members oppositely disposed along the first direction and movable relative to each other along the first direction; the winding member assembly is capable of switching between the first state and the second state; and the width of the winding member assembly in the second state in the second direction is smaller than the width of the winding member assembly in the first state in the second direction. In this way, in the second state, the second winding member may no longer support a corresponding part of the winding material, and may also provide clearance for the winding material when the first winding member stretches the winding material, so that before the winding material is removed from the winding member assembly, the winding member assembly may stretch the winding material at least once, flattening the winding material, improving the capability of the winding material to maintain its shape and shape stability after the winding material is removed from the winding member assembly, reducing the probability of collapse of the winding material due to gravity and the like, improving the reliability of the winding material. Moreover, the first sub-winding member can provide a movement clearance space for the second winding member, facilitating the smooth switching of the winding member assembly between the first state and the second state, and helping save the space occupied by the winding member assembly in its axial direction. If the winding material is an electrode assembly, reliability issues such as separator folding and electrode sheet wrinkling can be alleviated, and the safety of the electrode assembly can be enhanced.

Embodiments of this application provide an electric device using the battery disclosed herein as a power source, the electric device may be but is not limited to mobile phones, tablets, notebook computers, electric toys, electric tools, electric bicycles, electric vehicles, ships, spacecraft, and the like. The electric toys may include fixed or mobile electric toys, such as game consoles, electric vehicle toys, electric ship toys, and electric aircraft toys, and the spacecraft may include airplanes, rockets, space shuttles, and spaceships.

The following embodiments are described with the electric device as a vehicle for convenience of explanation, where the vehicle may be a fuel vehicle, a gas vehicle, or a new energy vehicle, and the new energy vehicle may be a pure electric vehicle, a hybrid vehicle, or an extended-range vehicle. The vehicle is provided with a battery, and the battery may be disposed at the bottom, head, or tail of the vehicle. The battery may be used for power supply of the vehicle, for example, the battery may serve as an operating power source of the vehicle. The vehicle may further include a controller and a motor. The controller is configured to control the battery to supply power to the motor, for example, for power needs during starting, navigation, and running of the vehicle. In some embodiments of this application, the battery may not only serve as the operating power source of the vehicle, but also as the driving power source of the vehicle, completely or partially replacing fuel or natural gas to provide driving power for the vehicle.

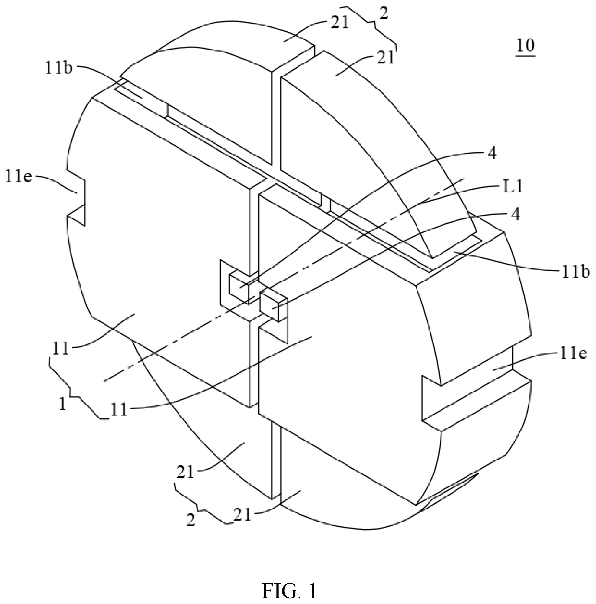

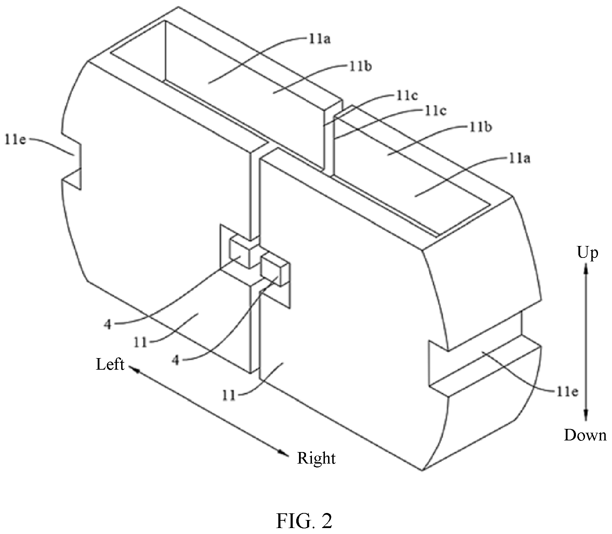

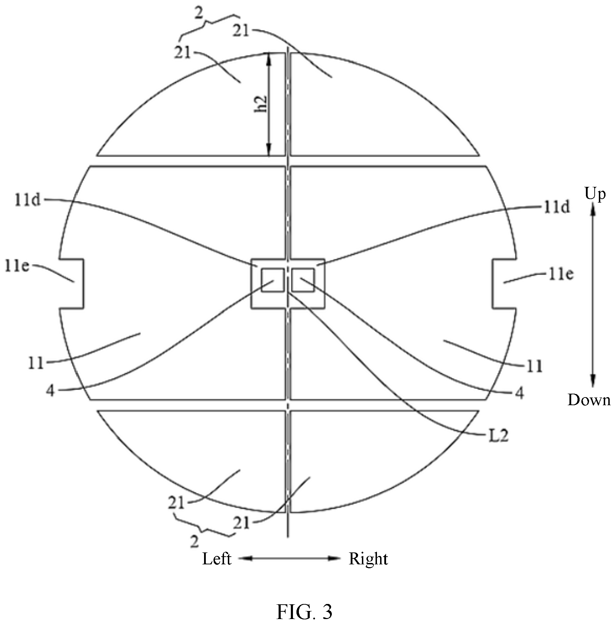

Refer to FIG. 1 to FIG. 3. FIG. 1 is a schematic diagram of a winding member assembly in some embodiments of this application. FIG. 2 is a schematic diagram of a first winding member and a clamping piece shown in FIG. 1. FIG. 3 is another schematic diagram of the winding member assembly shown in FIG. 1. In the embodiments of this application, a winding member assembly 10 includes a first winding member 1, where the first winding member 1 includes two first sub-winding members 11 oppositely disposed along a first direction, and the two first sub-winding members 11 are movable relative to each other along the first direction, so that at least one first sub-winding member 11 can move toward the other first sub-winding member 11 along the first direction or move away from the other first sub-winding member 11 along the first direction, to increase or decrease a distance between the two first sub-winding members 11 in the first direction.

The winding member assembly 10 further includes a second winding member 2; the first winding member 1 is provided with second winding members 2 on two sides along the second direction respectively; the winding member assembly 10 is configured to switch between a first state and a second state; a first direction, a second direction, and an axial direction of the winding member assembly 10 are perpendicular to each other; a radial direction of the winding member assembly 10 may be a direction passing through a central axis L1 of the winding member assembly 10 in a radial plane; the radial plane is perpendicular to the central axis L1 of the winding member assembly 10, so the winding member assembly 10 has multiple radial directions; and the first direction and the second direction may be understood as two of the multiple radial directions of the winding member assembly 10.

In the first state, an outer peripheral wall of the second winding member 2 and an outer peripheral wall of the first sub-winding member 11 are in a same preset cylindrical surface. The outer peripheral wall of the second winding member 2 may be understood as a side of the second winding member 2 facing away from the first winding member 1, so outer peripheral walls of the two second winding members 2 are disposed in opposite directions. The outer peripheral wall of the first sub-winding member 11 may be understood as a side wall surface of the first sub-winding member 11 facing away from the other first sub-winding member 11, so outer peripheral walls of the two first sub-winding members 11 are disposed in opposite directions. In the second state, the second winding member 2 is located inside the preset cylindrical surface, and in this case, in a cross-section of the winding member assembly 10, an orthogonal projection of the second winding member 2 is located inside an orthogonal projection of the preset cylindrical surface, so that a width of the winding member assembly 10 in the second direction when the second winding member 2 is in the second state is smaller than a width of the winding member assembly 10 in the second direction when the second winding member 2 is in the first state, and the cross-section of the winding member assembly 10 is perpendicular to the central axis L1 of the winding member assembly 10.

It can be learned that the winding member assembly 10 in the embodiments of this application can be used for winding electrode assemblies. During winding, the winding member assembly 10 can rotate around its central axis L1 to wind an anode electrode sheet, a cathode electrode sheet, and a separator together to form a wound electrode assembly; and certainly, the application scenario of the winding member assembly 10 is not limited thereto.

The winding member assembly 10 is used to wind electrode assemblies. When the winding member assembly 10 is in the first state, and the winding member assembly 10 starts to wind the winding material 30, the outer peripheral wall of the first sub-winding member 11 and the outer peripheral wall of the second winding member 2 can jointly support the winding material 30, and the winding member assembly 10 can wind the winding material 30 outside the preset cylindrical surface along the preset cylindrical surface. In this case, a shape of the winding material 30 after winding is substantially the same as that of the preset cylindrical surface. After the winding material 30 is wound for a certain length or the winding material 30 is wound for a certain thickness, the winding member assembly 10 stops rotating, and the winding member assembly 10 may switch to the second state. Since the second winding member 2 is located inside the preset cylindrical surface, the width of the winding member assembly 10 in the second direction decreases, and the two first sub-winding members 11 are controlled to move away from each other along the first direction, to be specific, at least one first sub-winding member 11 moves, along the first direction, away from the other first sub-winding member 11, so that the two first sub-winding members 11 can stretch the winding material 30 at least once. In the above stretching process, since the second winding member 2 provides a clearance space for change in the shape of the winding material 30, a width of the winding material 30 in the second direction may be reduced, and a width of the winding material 30 in the first direction may be increased, so a cross-sectional shape of a cylindrical structure corresponding to the winding material 30 can be changed in the stretching process. After the winding material 30 is wound to a certain extent (for example, the first winding member 1 stretches the winding material 30 a preset number of times), the winding material 30 is removed from the winding member assembly 10.

It is clear that the above operation on the winding material 30 can reduce a suspension height of the winding material 30 in the second direction when the winding material 30 is removed from the winding member assembly 10, that is, reduce suspension heights of parts on two sides of the winding material 30 in the second direction when the winding member assembly 10 is withdrawn from the winding material 30, to effectively reduce a risk that the winding material 30 struggles to maintain its original shape due to gravity of the winding material 30, especially when the second direction is an up-down direction during the withdrawal, thereby reducing the probability of collapse of the winding material 30 after being removed from the winding member assembly 10, improving the shape stability of the winding material 30, facilitating the subsequent shaping process of the winding material 30, and to a certain extent, alleviating reliability issues such as separator folding and electrode sheet wrinkling, and enhancing the reliability and safety of the winding material 30.

Especially for an electrode assembly with a relatively large width (for example, a width of the electrode assembly in the second direction during winding is greater than 400 mm or the like) or in a case that the preset cylindrical surface is a cylindrical surface and a diameter of the preset cylindrical surface is relatively large (for example, the diameter of the preset cylindrical surface is greater than 400 mm or the like), when the winding material 30 is removed from the winding member assembly 10 after the structure is wound, the winding material 30 is only clamped by an unloading assembly 20, and at least part of the winding material 30 is suspended, and therefore before the unloading assembly 20 stretches the winding material 30, the winding material 30 is prone to collapse due to gravity, affecting subsequent processes. For the winding member assembly 10 in the embodiments of this application, the winding member assembly 10 can switch to the second state before the winding material 30 is removed from the winding member assembly 10, and then the two first sub-winding members 11 move away from each other to stretch the winding material 30, so that when the winding material 30 is removed, because a suspension height of the winding material 30 is reduced in the stretching process, the stability of the winding material 30 in maintaining the original state is improved, facilitating subsequent processing.

For example, in the process of winding the winding material 30 by the winding member assembly 10, the first direction and the second direction change accordingly. When the winding is completed, the winding member assembly 10 stops rotating, the first direction may be a left-right direction, and the second direction may be an up-down direction, so after withdrawal of the winding member assembly, an upper part of the winding material 30 is prone to collapse. The winding member assembly 10 in the embodiments of this application can stretch the winding material 30 before the withdrawal to reduce the suspension height of the upper part of the winding material 30, thereby improving the shape stability of the winding material 30.

It can be understood that, in the embodiments of this application, the preset cylindrical surface may be cylindrical, elliptical, rhombic, or the like, that is, a cross-sectional shape of the winding member assembly 10 may be substantially circular, elliptical, rhombic, or the like. For example, as shown in the figures, the preset cylindrical surface is cylindrical, an outer peripheral wall of the first sub-winding member 11 is an arc surface, and the outer peripheral wall of the second winding member 2 is also an arc surface.

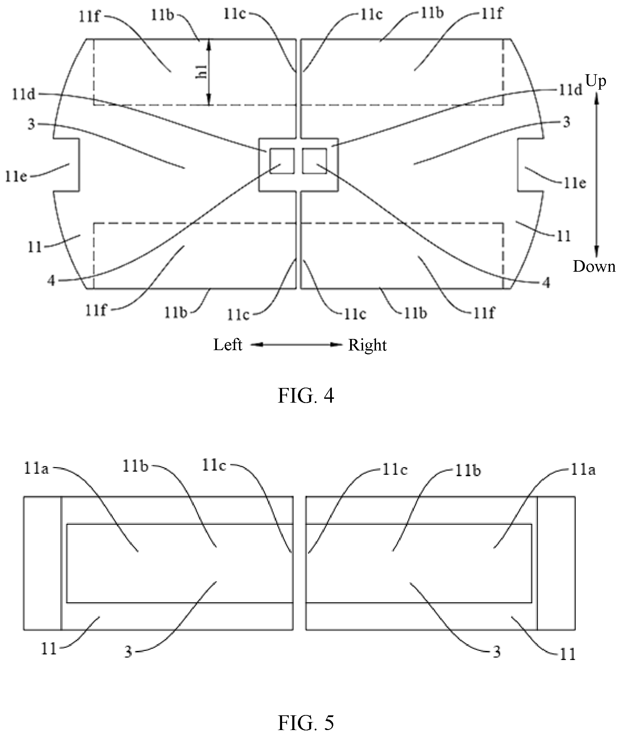

Refer to FIG. 1, FIG. 2, and FIG. 4. FIG. 4 is another schematic diagram of the first winding member 1 and clamping piece 4 shown in FIG. 2. Each of the first sub-winding members 11 has an accommodating cavity 11a formed inside, and the accommodating cavity 11a penetrates two side walls of the first sub-winding member 11 in the second direction to form fitting openings 11b respectively, so a side wall of each first sub-winding member 11 facing one of the second winding members 2 is formed with a fitting opening 11b, and a side wall of each first sub-winding member 11 facing the other second winding member 2 is also formed with a fitting opening 11b. Each second winding member 2 is movable relative to the first sub-winding member 11 to achieve switching of the winding member assembly 10 between the first state and the second state.

Then, in the second state, the second winding member 2 is located inside the preset cylindrical surface and at least part of the second winding member 2 extends into the accommodating cavity 11a through the corresponding fitting opening 11b. Then in the second state, part of the second winding member 2 extends into the corresponding first sub-winding member 11, and the other part is located outside the first sub-winding member 11, or the entire second winding member 2 extends into the corresponding first sub-winding member 11. The accommodating cavity 11a can provide a clearance space for the movement of the second winding member 2, to expand a movement space provided for the second winding member 2 when the winding member assembly 10 switches between the first state and the second state, facilitating smooth switching of the second winding member 2. Further, this reduces a length of the winding member assembly 10 in an axial direction, saving a space occupied by the winding member assembly 10 in the axial direction.

It can be understood that when the winding member assembly 10 is in the second state, the at least part of the second winding member 2 may extend into the corresponding first sub-winding member 11 through at least one fitting opening 11b located on a same side of the first sub-winding member 11 in the second direction.

In the above technical solution, the first winding member 1 includes two first sub-winding members 11 oppositely disposed along the first direction and movable relative to each other along the first direction; the winding member assembly 10 can switch between the first state and the second state; and the width of the winding member assembly 10 in the second state in the second direction is smaller than the width of the winding member assembly 10 in the first state in the second direction. In this way, in the second state, the second winding member 2 may no longer support a corresponding part of the winding material 30, and may also provide clearance for the winding material 30 when the first winding member 1 stretches the winding material 30, so that before the winding material 30 is removed from the winding member assembly 10, the winding member assembly 10 can stretch the winding material 30 at least once, flattening the winding material 30, improving the capability of the winding material 30 to maintain its shape and shape stability after the winding material 30 is removed from the winding member assembly 10, reducing the probability of collapse of the winding material 30 due to gravity and the like, improving the reliability of the winding material 30. Moreover, the first sub-winding member 11 can provide a movement clearance space for the second winding member 2, facilitating the smooth switching of the winding member assembly 10 between the first state and the second state, and also helping save the space occupied by the winding member assembly 10 in its axial direction. If the winding material 30 is an electrode assembly, reliability issues such as separator folding and electrode sheet wrinkling can be alleviated, the probability of electrode sheet wrinkling is reduced, and the safety of the electrode assembly can be enhanced.

It should be noted that a manner in which the winding member assembly 10 switches between the first state and the second state is not specifically limited in the embodiments of this application. For example, the switching of the winding member assembly 10 between the first state and the second state is achieved through movement of the second winding member 2 relative to the first winding member 1, for example, the second winding member 2 is movable relative to the first winding member 1, or the second winding member 2 is movable, rotatable, and the like relative to the first winding member 1, or the second winding member 2 transforms to achieve the switching of the winding member assembly 10 between the first state and the second state. When the winding member assembly 10 is in the second state, the second winding member 2 is located inside the preset cylindrical surface and at least part of the second winding member 2 extends into the accommodating cavity 11a through the corresponding fitting opening 11b, and then the width of the winding member assembly 10 in the second state in the second direction is smaller than the width of the winding member assembly 10 in the first state in the second direction. In this case, the second winding member 2 does not effectively support the corresponding part of the winding material 30 when the winding member assembly 10 is in the second state, to prepare avoidance for the change in the shape of the winding material 30 when the first winding member 1 stretches the winding material 30.

Refer to FIG. 1 and FIG. 3. In some embodiments, in the first state, the second winding member 2 is located outside the first sub-winding member 11.

In the above technical solution, the second winding member 2 is located outside the first sub-winding member 11 in the first state, facilitating reduction in a volume and occupied space of the second winding member 2 to a certain extent while ensuring the support provided by the second winding member 2 for the winding material 30, reducing the occupation of the internal space of the first winding member 1 by the second winding member 2 in the first state. In this case, when the winding member assembly 10 switches to the second state, utilization of the internal space of the first winding member 1 by the second winding member 2 is facilitated. Especially when multiple second states are set and the multiple second states are the first gear to the Nth gear, the above setting appropriately facilitates increase in the number of second states.

Refer to FIG. 1 to FIG. 4. In some embodiments, at least one second winding member 2 includes two second sub-winding members 21 spaced apart along the first direction, and a spacing space between the two second sub-winding members 21 may be used as a threading space for the winding material 30 before the winding starts, to achieve fixation of the winding material 30 (for example, clamping of the winding material 30) and the like. For example, the winding material 30 may be threaded from the outside of the winding member assembly 10 to the inside of the winding member assembly 10 through the spacing space between the two second sub-winding members 21. In this case, the winding material 30 may be directly or indirectly clamped by the two first sub-winding members 11, or the winding material 30 may be directly or indirectly clamped by the two second sub-winding members 21. Certainly, in some examples, each second winding member 2 includes two second sub-winding members 21 spaced apart along the first direction, and the winding material 30 may be threaded from the outside of the winding member assembly 10 to the inside of the winding member assembly 10 through the spacing space between the two second sub-winding members 21 of one second winding member 2 and threaded from the inside of the winding member assembly 10 to the outside of the winding member assembly 10 through the spacing space between the two second sub-winding members 21 of another second winding member 2. In this case, the winding material 30 may be clamped by another clamping component disposed outside the winding member assembly 10 or the like.

In the first state, the outer peripheral wall of the second sub-winding member 21 and the outer peripheral wall of the first sub-winding member 11 are both in the preset cylindrical surface. In the second state, at least part of the second sub-winding member 21 extends into the corresponding accommodating cavity 11a, so that the second sub-winding member 21 is located inside the preset cylindrical surface, and in this case, the at least part of the second sub-winding member 21 extends into one corresponding first sub-winding member 11, or the at least part of the second sub-winding member 21 extends into the two first sub-winding members 11.

Then, for a single second winding member 2, the following configurations may be achieved: in the second state, at least part of one of the second sub-winding members 21 extends into one of the first sub-winding members 11, and at least part of the other second sub-winding member 21 extends into the other first sub-winding member 11; or in the second state, at least part of one the second sub-winding members 21 extends into one of the first sub-winding members 11, and at least part of the other second sub-winding member 21 extends into one of the first sub-winding members 11 and the other first sub-winding member 11 (for example, a side wall of each first sub-winding member 11 facing the other first sub-winding member 11 is formed with an avoidance opening 11c described below).

In the above technical solution, at least one second winding member 2 includes two second sub-winding members 21 spaced apart along the first direction, so that a spacing space between the two second sub-winding members 21 may be used as a threading space for the winding material 30, so as to achieve fixation of the winding material 30.

For example, as shown in FIG. 1 to FIG. 4, the first direction is the left-right direction; the second direction is the up-down direction; the first winding member 1 includes two first sub-winding members 11 disposed along the left-right direction; the two first sub-winding members 11 may move toward each other or away from each other along the left-right direction; upper and lower sides of the first winding member 1 are provided with the second winding members 2 respectively; each second winding member 2 includes two second sub-winding members 21 spaced apart along the left-right direction respectively, so that each first sub-winding member 11 is provided with one second sub-winding member 21 on the upper and lower sides respectively; an accommodating cavity 11a is formed in the first sub-winding member 11; the accommodating cavity 11a penetrates an upper side wall of the first sub-winding member 11 to form a fitting opening 11b; the accommodating cavity 11a penetrates a lower side wall of the first sub-winding member 11 to form a fitting opening 11b; and for a single second sub-winding member 21, an upper second sub-winding member 21 is suitable for extending into one first sub-winding member 11 through the fitting opening 11b on the upper side of the first sub-winding member 11, or an upper second sub-winding member 21 is suitable for extending into the two first sub-winding members 11 through the fitting opening 11b on the upper side of the first sub-winding member 11; similarly, a lower second sub-winding member 21 is suitable for extending into one first sub-winding member 11 through a fitting opening 11b on the lower side of the first sub-winding member 11, or a lower second sub-winding member 21 is suitable for extending into the two first sub-winding members 11 through the fitting opening 11b on the lower side of the first sub-winding member 11.

Optionally, the second winding member 2 includes two second sub-winding members 21 spaced apart along the first direction. When the second winding member 2 is configured to be movable relative to the first winding member 1 along the second direction to achieve switching of the winding member assembly 10 between the first state and the second state, each second sub-winding member 21 can move relative to the first sub-winding member 11 along the second direction to change a distance between the second sub-winding member 21 and the corresponding first sub-winding member 11 in the second direction, and at the same time the second sub-winding member 21 may enter and exit the corresponding first sub-winding member 11 through the corresponding fitting opening 11b.

For example, the first direction is the left-right direction, one of the second sub-winding members 21 corresponds to one of the first sub-winding members 11, and the other second sub-winding member 21 corresponds to the other first sub-winding member 11. In the first state, both the second sub-winding members 21 are located outside the first winding member 1, and an outer peripheral wall of each second sub-winding member 21 and an outer peripheral wall of each first sub-winding member 11 are both located on the preset cylindrical surface. In the second state, the left second sub-winding member 21 may extend into the left first sub-winding member 11 through the corresponding fitting opening 11b, and the right second sub-winding member 21 may extend into the right first sub-winding member 11 through the corresponding fitting opening 11b. For example, a length of the fitting opening 11b in the first direction is greater than a width of the corresponding second sub-winding member 21 in the first direction, and a width of the fitting opening 11b in the axial direction of the winding member assembly 10 is greater than a thickness of the corresponding second sub-winding member 21 in the axial direction of the winding member assembly 10, so that the fitting opening 11b allows passage of the corresponding second sub-winding member 21.

Optionally, for a single second winding member 2, the two second sub-winding members 21 may be configured to move synchronously, so that a distance between each second sub-winding member 21 and the corresponding first sub-winding member 11 in the second direction changes synchronously; but this is not limited.

Certainly, the structure of the second winding member 2 is not limited thereto; in other embodiments of this application, the second winding member 2 may be configured as a single winding member block, and a threading channel may be formed between the second winding member 2 and the first winding member 1, so as to achieve threading of the winding material 30 and facilitate fixation of the winding material 30.

Refer to FIG. 2 and FIG. 4. In some embodiments, a side wall of at least one first sub-winding member 11 facing the other first sub-winding member 11 is formed with an avoidance opening 11c. The avoidance opening 11c communicates with the accommodating cavity 11a and the two corresponding fitting openings 11b, suitable for avoiding the corresponding second sub-winding member 21. Then, for a single first sub-winding member 11 formed with the avoidance opening 11c, the avoidance opening 11c communicates with the accommodating cavity 11a thereof and the two fitting openings 11b thereon.

It can be learned that the avoidance opening 11c may also provide avoidance for the switching movement of the winding member assembly 10 between the first state and the second state, helping further expand a movement space provided for the second winding member 2 when the winding member assembly 10 switches between the first state and the second state.

In addition, since the avoidance opening 11c is provided, the side wall of the first sub-winding member 11 facing the other first sub-winding member 11 is not prone to interfere with the movement of the second sub-winding member 21, and to a certain extent, the spacing between the two second sub-winding members 21 in the first direction can be appropriately reduced, to adaptively increase a proportion of the outer peripheral wall of the second sub-winding member 21 on the preset cylindrical surface in the circumferential direction of the winding member assembly 10, thereby increasing a support range of the outer peripheral wall of the second winding member 2 for the winding material 30 in the circumferential direction in the first state, and improving the reliability of winding the winding material 30 by the winding member assembly 10. For example, when the second winding member 2 is configured to be movable relative to the first winding member 1 along the second direction to achieve switching of the winding member assembly 10 between the first state and the second state; and the avoidance opening 11c does not block the movement of the corresponding second sub-winding member 21. In the first state, the spacing between the two second sub-winding members 21 can be appropriately reduced, for example, by appropriately increasing the width of at least one second sub-winding member 21 in the first direction, to improve the circumferential support range of the second winding member 2 for the winding material 30 while helping enhance the structural strength of the second sub-winding member 21.

In the above technical solution, the avoidance opening 11c can provide avoidance for the switching movement of the winding member assembly 10 between the first state and the second state. This helps further expand the movement space provided for the second winding member 2 when the winding member assembly 10 switches between the first state and the second state, so that the spacing between the two second sub-winding members 21 in the first direction can be appropriately reduced to a certain extent, to adaptively increase the proportion of the outer peripheral wall of the second sub-winding member 21 on the preset cylindrical surface in the circumferential direction of the winding member assembly 10, thereby increasing the support range of the outer peripheral wall of the second winding member 2 for the winding material 30 in the circumferential direction in the first state.

It can be understood that, in the above technical solution, due to the setting of the avoidance opening 11c, the spacing between the two second sub-winding members 21 in the first direction can be appropriately reduced to a certain extent, which is applicable to the following two configurations: Configuration one: in the second state, at least part of one of the second sub-winding members 21 extends into one of the first sub-winding member 11, and at least part of the other second sub-winding member 21 extends into the other first sub-winding member 11; Configuration two: in the second state, at least part of one of the second sub-winding members 21 extends into one of the first sub-winding members 11, and at least part of the other second sub-winding member 21 extends into the above one first sub-winding member 11 and the other first sub-winding member 11. In other words, due to the setting of the avoidance opening 11c, the spacing between the two second sub-winding members 21 in the first direction is not limited by the spacing between the two first sub-winding members 11 in the first direction.

For example, the first direction is the left-right direction, the second direction is the up-down direction, and a side wall of each first sub-winding member 11 facing the other first sub-winding member 11 is formed with an avoidance opening 11c. In the first state, a right end of the left second sub-winding member 21 is flush with a right end of the corresponding first sub-winding member 11, and a left end of the right second sub-winding member 21 is flush with a left end of the corresponding first sub-winding member 11. In the second state, at least part of the left second sub-winding member 21 is suitable for extending into a left accommodating cavity 11a through the corresponding fitting opening 11b and the corresponding avoidance opening 11c, and at least part of the right second sub-winding member 21 is suitable for extending into a right accommodating cavity 11a through the corresponding fitting opening 11b and the corresponding avoidance opening 11c.

Refer to FIG. 4. In some embodiments, a partition 3 is provided in the accommodating cavity 11a. The partition 3 is connected to two opposite side walls of the accommodating cavity 11a, to divide the accommodating cavity 11a into two chambers 11f arranged in sequence along the second direction. The two chambers 11f correspond to the two second winding members 2 respectively, so one of the chambers 11f is configured to accommodate part of one of the second winding members 2, and the other chamber 11f is configured to accommodate part of the other second winding member 2. In addition, the partition 3 can provide certain support for the two opposite side walls of the accommodating cavity 11a, which can improve the structural stability of the accommodating cavity 11a and improve the structural reliability of the winding member assembly 10.

In the above technical solution, the partition 3 is provided in the accommodating cavity 11a to divide the accommodating cavity 11a into the two chambers 11f. In this way, while the accommodating requirement of the second winding member 2 in the second state is satisfied, the structural stability of the accommodating cavity 11a is improved, and the structural reliability of the winding member assembly 10 is improved.

It can be understood that a relationship between a depth h1 of the chamber 11f in the second direction and a width h2 of the second winding member 2 in the second direction can be set according to actual needs. For example, h1 ≥ h2. In this case, the second winding member 2 completely extends into the first winding member 1 in the second direction. Certainly, h1 may alternatively be less than h2.

Optionally, the partition 3 and the first sub-winding member 11 are an integral piece; or the partition 3 and the first sub-winding member 11 are separate pieces, and in this case, the partition 3 may be fixed to the first sub-winding member 11 by assembly fixing means.

Optionally, a side wall of at least one first sub-winding member 11 facing the other first sub-winding member 11 is formed with an avoidance opening 11c; the avoidance opening 11c communicates with the accommodating cavity 11a and the two corresponding fitting openings 11b, suitable for avoiding the second sub-winding member 21; a partition 3 is provided in the first sub-winding member 11 formed with the avoidance opening 11c; and the partition 3 divides the accommodating cavity 11a of the first sub-winding member 11 into two chambers 11f arranged in sequence along the second direction. The partition 3 may extend to the avoidance opening 11c to divide the avoidance opening 11c into two sub-openings, or the partition 3 extends to be spaced from the avoidance opening 11c.

Certainly, the embodiments of this application are not limited thereto. In other embodiments, no partition 3 may be provided in the accommodating cavity 11a, and in this case, the first sub-winding member 11 may be substantially hollow.

Refer to FIG. 3. In some embodiments, the winding member assembly 10 has a centerline L2 extending along the second direction.

The two first sub-winding members 11 are disposed on two sides of the centerline L2 in the first direction respectively; and/or the two second sub-winding members 21 of at least one of the second winding members 2 are disposed on the two sides of the centerline L2 in the first direction respectively.

In the above technical solution, disposing the two first sub-winding members 11 on the two sides of the centerline L2 in the first direction respectively, and/or disposing the two second sub-winding members 21 of the second winding member 2 on the two sides of the centerline L2 in the first direction respectively can allow an opposite or staggered arrangement of a spacing region between the two first sub-winding members 11 and a spacing region between the two second sub-winding members 21 of the second winding member 2, so that the winding material 30 can be threaded through the spacing region between the two second sub-winding members 21 to the spacing region between the two first sub-winding members 11, facilitating subsequent clamping or continued threading.

In addition, in the above technical solution, the two first sub-winding members 11 are movable relative to each other. If the two first sub-winding members 11 are configured to clamp the winding material 30, the winding material 30 may be threaded through the spacing region between the two second sub-winding members 21 to the spacing region between the two first sub-winding members 11, to achieve clamping and release of the winding material 30 through the two first sub-winding members 11.

For example, the first direction is the left-right direction and the second direction is the up-down direction. The above technical solution includes the following examples.

Example one: The two first sub-winding members 11 are disposed on the left and right sides of the centerline L2 respectively, to be specific, one of the first sub-winding members 11 is disposed on the left side of the centerline L2, and the other first sub-winding member 11 is disposed on the right side of the centerline L2; and the two second sub-winding members 21 of at least one second winding member 2 are disposed on the left and right sides of the centerline L2 respectively, to be specific, in one second winding member 2, one of the second sub-winding members 21 is disposed on the left side of the centerline L2, and the other second sub-winding member 21 is disposed on the right side of the centerline L2. In this way, the spacing region between the two first sub-winding members 11 and the spacing region between the two second sub-winding members 21 of the second winding member 2 are arranged opposite each other in the up-down direction.

Further, in Example one, the two first sub-winding members 11 are symmetrically disposed with respect to the centerline L2, and/or the two second sub-winding members 21 of at least one second winding member 2 are symmetrically disposed with respect to the centerline L2.

Example two: The two first sub-winding members 11 are disposed on the left and right sides of the centerline L2 respectively, to be specific, one of the first sub-winding members 11 is disposed on the left side of the centerline L2, and the other first sub-winding member 11 is disposed on the right side of the centerline L2; and one of the two second sub-winding members 21 of the second winding member 2 is disposed on the left or right side of the centerline L2, part of the other is disposed on the left side of the centerline L2, and the other part of the other is disposed on the right side of the centerline L2. In this way, the spacing region between the two first sub-winding members 11 and the spacing region between the two second sub-winding members 21 of the second winding member 2 are staggered in the left-right direction, and an offset distance may be specifically set according to actual needs.

In Example two, the setting forms of the two second winding members 2 may be the same or different. For example, one of the second sub-winding members 21 in an upper second winding member 2 is disposed on the left side of the centerline L2, part of the other second sub-winding member 21 is disposed on the left side of the centerline L2, and the other part is disposed on the right side of the centerline L2; while one of the second sub-winding members 21 in a lower second winding member 2 is disposed on the left side of the centerline L2, part of the other second sub-winding member 21 is disposed on the left side of the centerline L2, and the other part is disposed on the right side of the centerline L2, or one of the second sub-winding members 21 in the lower second winding member 2 is disposed on the right side of the centerline L2, part of the other second sub-winding member 21 is disposed on the left side of the centerline L2, and the other part is disposed on the right side of the centerline L2.

Further, in Example two, the two first sub-winding members 11 are symmetrically disposed with respect to the centerline L2.

Example three: Two second sub-winding members 21 of at least one second winding member 2 are disposed on the left and right sides of the centerline L2 respectively, to be specific, in one second winding member 2, one of the second sub-winding members 21 is disposed on the left side of the centerline L2, and the other second sub-winding member 21 is disposed on the right side of the centerline L2; one first sub-winding member 11 is disposed on the left side or right side of the centerline L2, part of the other first sub-winding member 11 is disposed on the left side of the centerline L2, and the other part is disposed on the right side of the centerline L2. In this way, the spacing region between the two first sub-winding members 11 and the spacing region between the two second sub-winding members 21 of the second winding member 2 are staggered in the left-right direction, and an offset distance may be specifically set according to actual needs.

Further, in Example three, the two second sub-winding members 21 of at least one second winding member 2 are symmetrically disposed with respect to the centerline L2.

Refer to FIG. 1 to FIG. 4. In some embodiments, the winding member assembly 10 further includes two oppositely disposed clamping pieces 4. The two clamping pieces 4 are movable relative to each other to clamp the winding material 30, so as to achieve fixation of the winding material 30, thereby achieving rotation of the winding member assembly 10 to wind the winding material 30 around the outer peripheral wall of the winding member assembly 10. It can be learned that before the winding member assembly 10 winds the winding material 30, part of the winding material 30 can be threaded between the two clamping pieces 4, and after the clamping pieces 4 clamp the winding material 30, the winding member assembly 10 starts to rotate to wind the winding material 30, reducing a risk of loosening or wrinkling of the winding material 30 during the winding, improving the structural safety of the winding material 30 after formation.

As shown in FIG. 1 to FIG. 4, the two clamping pieces 4 are disposed correspondingly on the two first sub-winding members 11 respectively, so each clamping piece 4 is disposed on one corresponding first sub-winding member 11. In this case, the two clamping pieces 4 can approach each other or move away from each other to achieve clamping and release of the winding material 30. For example, one clamping piece 4 is fixedly disposed on one first sub-winding member 11, and the other clamping piece 4 is movably disposed on the other first sub-winding member 11 to achieve approaching or moving away of the two clamping pieces 4; or each clamping piece 4 is movably disposed on a corresponding first sub-winding member 11.

In the above technical solution, the clamping pieces 4 are provided, and then the winding material 30 can be clamped by the clamping pieces 4 to achieve fixation of the winding material 30, thereby achieving winding of the winding material 30 on the outer peripheral wall of the winding member assembly 10. In addition, since the clamping pieces 4 are provided, during clamping and fixation of the winding material 30, a position of the first sub-winding member 11 can remain unchanged, that is, the position of the first sub-winding member 11 is relatively fixed, so that the preset cylindrical surface is relatively fixed in the first state. This helps lower the position requirements for the second winding member 2 in the first state and second state; and during the winding, the position of the first sub-winding member 11 does not need to be adjusted, helping simplify the winding steps of the winding member assembly 10.

Refer to FIG. 3 and FIG. 4. In some embodiments, the outer peripheral walls of the two first sub-winding members 11 are disposed in opposite directions; a side wall of each first sub-winding member 11 facing the other first sub-winding member 11 is formed with a mounting groove 11d; and at least part of each clamping piece 4 is accommodated in the mounting groove 11d of the corresponding first sub-winding member 11. It can be learned that the mounting groove 11d can provide a mounting space for the clamping piece 4, to reduce the influence of the clamping piece 4 on the spacing between the two first sub-winding members 11, improve the winding effect, and help appropriately reduce an outer contour dimension of the winding member assembly 10 and reduce a space occupied by the winding member assembly 10.

In some other embodiments, the second winding member 2 includes two second sub-winding members 21 spaced apart along the first direction, and each clamping piece 4 is disposed on the two second sub-winding members 21 respectively. For example, one clamping piece 4 is fixedly disposed on one of the second sub-winding members 21, and the other clamping piece 4 is movably disposed on the other second sub-winding member 21 to achieve approaching or moving away of the two clamping pieces 4; or each clamping piece 4 is movably disposed on a corresponding second sub-winding member 21.

Certainly, in other embodiments of this application, the winding member assembly 10 may not be provided with the clamping pieces 4. In this case, the two first sub-winding members 11 can achieve clamping and fixation of the winding material 30; or when the second winding member 2 includes two second sub-winding members 21 spaced apart along the first direction, the spacing between the two second sub-winding members 21 in the first direction is adjustable, so that the two second sub-winding members 21 can achieve clamping and fixation of the winding material 30; or a separate clamping component independent of the winding member assembly 10 may be additionally provided.

Refer to FIG. 2 to FIG. 4. In some embodiments, the outer peripheral walls of the two first sub-winding members 11 are disposed in opposite directions; an outer peripheral wall of each of the first sub-winding members 11 is formed with a groove 11e; and grooves 11e of the two first sub-winding members 11 are disposed in opposite directions along a radial direction of the winding member assembly 10, that is, openings of the two grooves 11e are disposed in opposite directions.

It can be learned that the groove 11e can provide a clamping space for the unloading assembly 20, so that the unloading assembly 20 can clamp the winding material 30 after winding to separate the winding material 30 from the winding member assembly 10, to achieve the withdrawal operation. For example, the unloading assembly 20 includes an inner clamping member 6 and an outer clamping member 7. The inner clamping member 6 is configured for insertion into the groove 11e, so that part of the inner clamping member 6 fits a radial inner side during the winding. The outer clamping member 7 is suitable for moving to a radial outer side of the winding material 30, and the outer clamping member 7 and the inner clamping member 6 move relative to each other to clamp the winding material 30. When the winding material 30 is to be removed from the winding member assembly 10, an inner clamping member 6 of one unloading assembly 20 is inserted into the groove 11e, an outer clamping member 7 moves to the outer side of the winding material 30, an inner clamping member 6 of the other unloading assembly 20 is inserted into another groove 11e, and an outer clamping member 7 also moves to the outer side of the winding material 30. The corresponding outer clamping member 7 and inner clamping member 6 approach each other to clamp the winding material 30 from the inner and outer sides. In this case, the outer clamping member 7 and inner clamping member 6 can pull the winding material 30 to remove the winding material 30 from the winding member assembly 10. The two unloading assemblies 20 both apply force to the winding material 30, and the two unloading assemblies 20 are oppositely disposed along the radial direction of the winding material 30, balancing the force applied by the two unloading assemblies 20 to the winding material 30, reducing a risk of deformation of the winding material 30.

After the unloading assemblies 20 remove the winding material 30, the two unloading assemblies 20 can move away from each other to stretch the winding material 30, further flattening the winding material 30.

In the above technical solution, the groove 11e is provided on the outer peripheral wall of each first sub-winding member 11, to provide an insertion space with the unloading assembly 20, so as to separate the winding material 30 from the winding member assembly 10 for the next process; further, since the two grooves 11e are disposed in opposite directions along the radial direction of the winding member assembly 10, the two unloading assemblies 20 may be oppositely disposed along the radial direction, so that the winding material 30 can be directly stretched and further flattened after the winding material 30 is removed, balancing the force on the winding material 30, reducing the risk of deformation of the winding material 30.

Optionally, materials of the first winding member 1 and the second winding member 2 may be aluminum alloy, alloy steel, or the like.

Refer to FIG. 1 to FIG. 4. In some embodiments, the second winding member 2 moves in a cross-section of the winding member assembly 10 to switch the winding member assembly 10 between the first state and the second state. Therefore, in the process of switching between the first state and the second state by the winding member assembly 10, a position of the second winding member 2 in the axial direction of the winding member assembly 10 may remain unchanged.

For example, the second winding member 2 may move and/or rotate in a cross-section of the winding member assembly 10.

In the above technical solution, the second winding member 2 is configured to move in the cross-section of the winding member assembly 10 to switch the winding member assembly 10 between the first state and the second state. This can reduce the movement space required for the second winding member 2 during the above state switching, saving the space occupied by the winding member assembly 10 during operation.

Refer to FIG. 1 to FIG. 4. In some embodiments, at least one second winding member 2 is movable relative to the first winding member 1 along the second direction.

In the above technical solution, at least one second winding member 2 is configured as movable relative to the first winding member 1 along the second direction. This simplifies the movement of the at least one second winding member 2, and further reduces the movement space required for the at least one second winding member 2 during the switching of the winding member assembly 10 between the first state and the second state

For example, as shown in FIG. 1 to FIG. 4, each second winding member 2 is movable relative to the first winding member 1 along the second direction to change the position of the second winding member 2 relative to the first winding member 1 in the second direction, thereby changing the width of the winding member assembly 10 in the second direction and achieving switching of different states of the winding member assembly 10. Optionally, the two second winding members 2 may be configured to move synchronously along the second direction to achieve synchronous switching of the two second winding members 2, helping improve winding efficiency.

For example, if the configuration of the winding member assembly 10 is as follows: in the first state, the second winding member 2 is located outside the first sub-winding member 11, and in the second state, at least part of the second winding member 2 extends into the corresponding first sub-winding member 11, when at least one second winding member 2 is movable relative to the first winding member 1 along the second direction, an extension length of the above at least one second winding member 2 into the first winding member 1 in the second direction is adjustable, thereby adjusting the width of the winding member assembly 10 in the second direction.

Refer to FIG. 1 to FIG. 4. In some embodiments, multiple second states are set, and the multiple second states are the first gear to the Nth gear. From the first gear to the Nth gear, the width of the winding member assembly 10 in the second direction decreases. In the 1st gear, the width of the winding member assembly 10 in the second direction is recorded as W₁; in the Mth gear, the width of the winding member assembly 10 in the second direction is W_{M}; 1 ≤ M ≤ N; in the Nth gear, the width of the winding member assembly 10 in the second direction is W_{N} and N ≥ 2, and then W₁ > W_{M} > W_{N}. In other words, a higher the gear means a smaller width of the winding member assembly 10 in the second direction. In the first state, the width of the winding member assembly 10 in the second direction is W, and W > W₁.

It can be learned that under the above configuration, the winding member assembly 10 can easily stretch the winding material 30 at least once before the winding material 30 is removed. For example, if the winding member assembly 10 stretches the winding material 30 once before the winding material 30 is removed, the winding member assembly 10 may stretch the winding material 30 at any gear, for example, the winding member assembly 10 may stretch the winding material 30 at the Nth gear. For another example, if the winding member assembly 10 stretches the winding material 30 multiple times before the winding material 30 is removed, the winding member assembly 10 may stretch the winding material 30 at any two gears, where the gear corresponding to the former stretch is lower than the gear corresponding to the later stretch. A shape of the winding material 30 after stretching at a higher gear is flatter than a shape of the winding material 30 after stretching at a lower gear, and a gear difference between two consecutive stretches may be greater than or equal to 1.

In the above technical solution, the multiple second states from the first gear to the Nth gear are set, and from the first gear to the Nth gear, the width of the winding member assembly 10 in the second direction decreases. In this case, while the shape stability of the winding material 30 after being removed from the winding member assembly 10 is improved, different requirements on the number of stretches, flatness degree, and the like for different winding materials 30 can be adaptively satisfied.

Optionally, at the Nth gear, the second winding member 2 does not protrude from the corresponding side wall of the first winding member 1 in the second direction. For example, the second direction is the up-down direction. For the upper second winding member 2, at the Nth gear, an upper end surface of the upper second winding member 2 is located below an upper side wall of the first winding member 1, or an upper end surface of the upper second winding member 2 is flush with an upper side wall of the first winding member 1. For the lower second winding member 2, at the Nth gear, a lower end surface of the lower second winding member 2 is located above a lower side wall of the first winding member 1, or a lower end surface of the lower second winding member 2 is flush with a lower side wall of the first winding member 1. Certainly, in another example, one second state is provided, and in the second state, the second winding member 2 does not protrude from the corresponding side wall of the first winding member 1 in the second direction.

In a second aspect, embodiments of this application provide a winding device, including the above winding member assembly 10, a first driving mechanism, and a second driving mechanism. The first driving mechanism is configured to drive the winding member assembly 10 to rotate around a central axis L1 of the winding member assembly 10 to achieve winding of the winding material 30. The second driving mechanism is configured to drive at least one first sub-winding member 11 to move along a first direction to achieve relative movement of two first sub-winding members 11 in the first direction.

In the above technical solution, since the winding device adopts the above winding member assembly 10, and the winding member assembly 10 can improve a capability of the winding material 30 to maintain its shape and shape stability after being removed from the winding member assembly 10, the winding device can reduce a probability of collapse of the winding material and improve the use reliability of the winding material; and if the winding material 30 is an electrode assembly, reliability issues such as separator folding and electrode sheet wrinkling can be alleviated, enhancing safety of the electrode assembly.

Refer to FIG. 1 and FIG. 3. Each second winding member 2 can move relative to the first sub-winding member 11 along the second direction to achieve switching of the winding member assembly 10 between the first state and the second state.

In the first state, the second winding member 2 is located outside the first sub-winding member 11; the winding device further includes a third driving mechanism; and the third driving mechanism may be configured to drive the second winding member 2 to move relative to the first winding member 1 along the second direction to switch the winding member assembly 10 between the first state and the second state.

For example, the second winding member 2 includes two second sub-winding members 21, and the third driving mechanism is configured to drive the two second sub-winding members 21 of the corresponding second winding member 2 to move relative to the first winding member 1 along the second direction.

In the above technical solution, the movement of the second winding member 2 is simple, which can further reduce the movement space required for the second winding member 2 during the switching of the winding member assembly 10 between the first state and the second state.

In some embodiments, the winding member assembly 10 includes two oppositely disposed clamping pieces 4 that can move relative to each other, and the winding device may include a fourth driving mechanism, where the fourth driving mechanism is configured to drive at least one clamping piece 4 to move to achieve clamping and release of the winding material 30 by the two clamping pieces 4.

In a third aspect, embodiments of this application provide a winding method, in which a winding member assembly 10 is used to wind an electrode assembly. The winding member assembly 10 includes a first winding member 1 and a second winding member. The first winding member 1 includes two first sub-winding members 11 oppositely disposed along a first direction and movable relative to each other along the first direction. The first winding member 1 is provided with second winding members 2 on two sides along the second direction respectively. The winding member assembly 10 is configured to switch between a first state and a second state. In the first state, an outer peripheral wall of the second winding member 2 and an outer peripheral wall of the first sub-winding member 11 are in a same preset cylindrical surface. In the second state, the second winding member 2 is located inside the preset cylindrical surface, so that a width of the winding member assembly 10 in the second state in the second direction is smaller than a width of the winding member assembly 10 in the first state in the second direction. The first direction, the second direction, and an axial direction of the winding member assembly 10 are perpendicular to each other.

Each of the first sub-winding members 11 has an accommodating cavity 11a formed inside. The accommodating cavity 11a penetrates two side walls of the first sub-winding member 11 in the second direction to form fitting openings 11b respectively, so a side wall of each first sub-winding member 11 facing one of the second winding members 2 is formed with a fitting opening 11b, and a side wall of each first sub-winding member 11 facing the other second winding member 2 is also formed with a fitting opening 11b. Each second winding member 2 is movable relative to the first sub-winding member 11 to achieve switching of the winding member assembly 10 between the first state and the second state. In the second state, the second winding member 2 is located inside the preset cylindrical surface and at least part of the second winding member 2 extends into the accommodating cavity 11a through the corresponding fitting opening 11b. Then, in the second state, part of the second winding member 2 extends into the corresponding first sub-winding member 11, and the other part is located outside the first sub-winding member 11, or the entire second winding member 2 extends into the corresponding first sub-winding member 11.

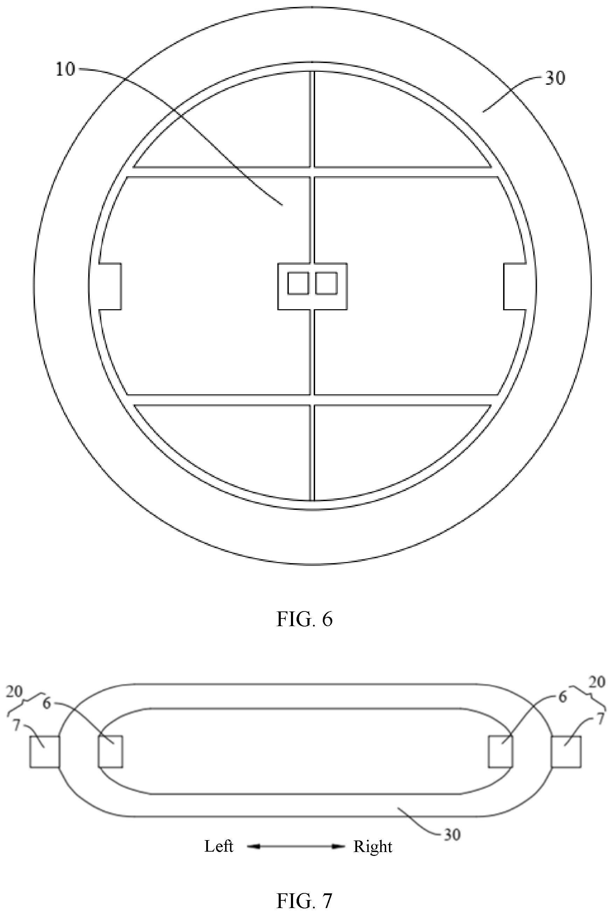

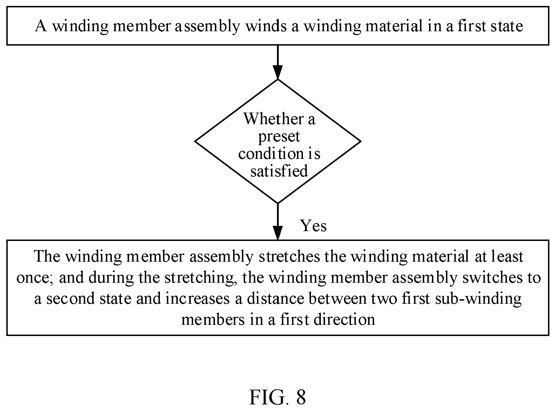

Refer to FIG. 6 to FIG. 8. FIG. 6 is a schematic diagram of winding the winding material by the winding member assembly 10 shown in FIG. 1. FIG. 7 is a schematic diagram of stretching a winding material by an unloading assembly 20 provided in some embodiments of this application. FIG. 8 is a schematic flowchart of a winding method provided in some embodiments of this application, where the winding method includes: a winding member assembly 10 winds a winding material 30 in a first state until a preset condition is satisfied; the winding member assembly 10 stretches the winding material 30 at least once; and during the stretching, the winding member assembly 10 switches to the second state and increases a distance between two first sub-winding members 11 in a first direction.

Increasing the distance between the two first sub-winding members 11 in the first direction, for example, may be achieved by back-to-back movement of the two first sub-winding members 11, or by movement of one of the first sub-winding members 11 along the first direction toward a direction away from the other first sub-winding member 11.

It can be understood that, during the stretching, the sequence of "the winding member assembly 10 switches to the second state" and "increases a distance between two first sub-winding members 11 in a first direction" is adaptable. For example, the winding member assembly 10 may be first switched to the second state, and then the distance between the two first sub-winding members 11 in the first direction is increased; or both are performed synchronously, that is, in the process in which the winding member assembly 10 switches to the second state, the distance between the two first sub-winding members 11 in the first direction is increased. Further, when the above two steps are performed synchronously, a rate of increasing the distance between the two first sub-winding members 11 in the first direction may match a degree of switching of the winding member assembly 10 to the second state, so that during the stretching, an outer peripheral wall of the second winding member 2 can always support a corresponding part of the winding material 30, so as to further reduce a probability of collapse of the winding material 30.

It can be learned that before removing the winding material 30 from the winding member assembly 10, the winding member assembly 10 stretches the winding material 30 at least once, flattening a shape of the winding material 30, thereby effectively reducing a suspension height of an unsupported part of the winding material 30 when the winding material 30 is removed from the winding member assembly 10, especially reduce a suspension height of the upper part of the winding material 30 when the winding material 30 is removed from the winding member assembly 10, reducing the risk of collapse of the above part of the winding material 30, improving stability of the winding material 30 in maintaining a shape at removal, facilitating subsequent shaping process, and further reducing problems such as separator folding and electrode sheet wrinkling caused by collapse of the winding material 30, improving use reliability and safety of the winding material 30.

For example, the winding member assembly 10 stretches the winding material 30 once. The winding member assembly 10 is in the first state and rotates to wind the winding material 30 until the preset condition is satisfied. The winding member assembly 10 stops rotating, and then the winding member assembly 10 switches to the second state. In this case, a width of the winding member assembly 10 in the second state in the second direction is smaller than a width of the winding member assembly 10 in the first state in the second direction, and a distance between the two first sub-winding members 11 in the first direction is increased, gradually decreasing a width of the winding material 30 in the second direction and gradually increasing a width of the winding material 30 in the first direction, flattening the winding material 30.

For another example, the winding member assembly 10 stretches the winding material 30 twice. Multiple second states may be the first gear and the second gear. From the first gear to the second gear, the width of the winding member assembly 10 in the second direction decreases. The winding member assembly 10 is in the first state and rotates to wind the winding material 30 until the preset condition is satisfied. The winding member assembly 10 stops rotating, and then the winding member assembly 10 switches to the first gear, increasing the distance between the two first sub-winding members 11 in the first direction, flattening the winding material 30. After the first stretch is completed, the second stretch can be performed. The winding member assembly 10 switches to the second gear, further increasing the distance between the two first sub-winding members 11 in the first direction, further flattening the winding material 30. Certainly, the winding member assembly 10 may stretch the winding material 30 three or more times.

In the above technical solution, before removing the winding material from the winding member assembly 10, the winding member assembly 10 stretches the winding material 30 at least once, which can improve a capability of the winding material 30 to maintain its shape and shape stability after being removed from the winding member assembly 10. In this way, the winding method can reduce the probability of collapse of the winding material 30 and improve the use reliability of the winding material 30; and if the winding material 30 is an electrode assembly, reliability issues such as separator folding and electrode sheet wrinkling can be alleviated, enhancing safety of the electrode assembly.

In the embodiments of this application, the preset condition is not specifically limited, for example, the preset condition may be that a length of the winding material 30 after winding satisfies a preset length, or a thickness of the winding material 30 after winding satisfies a preset thickness, or the like.

Refer to FIG. 6 and FIG. 7. In some embodiments, the winding device further includes an unloading assembly 20, and the unloading assembly 20 is configured to remove the winding material 30 from the winding member assembly 10.

The winding method further includes: after the unloading assembly 20 removes the winding material 30, the unloading assembly 20 stretches the winding material 30. The change in the shape of the winding material 30 in this stretching process is not limited by a dimension of the first winding member 1 in the second direction, further flattening the winding material 30, helping reduce a thickness of the electrode assembly and reduce a thickness of a battery cell.

For example, the unloading assembly 20 includes an inner clamping member 6 and an outer clamping member 7. The inner clamping member 6 is disposed inside the winding material 30, the outer clamping member 7 moves to the outer side of the winding material 30, and the inner clamping member 6 and the outer clamping member 7 clamp the winding material 30 and withdraw the winding member assembly 10 to achieve the withdrawal. Then the two unloading assemblies 20 move away from each other to stretch the winding material 30.

Refer again to FIG. 1 to FIG. 8 for description of the winding member assembly 10 in specific embodiments of this application.

In the embodiments of this application, the winding member assembly 10 includes a first winding member 1, a second winding member 2, and a clamping piece 4. The winding member assembly 10 has a central axis L1 and a centerline L2, the central axis L1 extends along the axial direction of the winding member assembly 10, and the centerline L2 extends along an up-down direction.

The first winding member 1 includes two first sub-winding members 11 oppositely disposed along a left-right direction, the two first sub-winding members 11 are disposed on left and right sides of the centerline L2 respectively, and the two first sub-winding members 11 are movable relative to each other along a first direction to change a distance between the two first sub-winding members 11 in the first direction. A side wall of each first sub-winding member 11 facing the other first sub-winding member 11 is formed with a mounting groove 11d, and an outer peripheral wall of each of the first sub-winding members 11 facing away from the other first sub-winding member 11 is formed with a groove 11e. Grooves 11e of the two first sub-winding members 11 are disposed in opposite directions along a radial direction of the winding member assembly 10 to provide an insertion space for the inner clamping member 6 of the unloading assembly 20, helping the unloading assembly 20 to remove the winding material from the winding member assembly 10.

Each of the first sub-winding members 11 has an accommodating cavity 11a formed inside. The accommodating cavity 11a penetrates upper and lower side walls of the first sub-winding member 11 to form fitting openings 11b respectively. The accommodating cavity 11a penetrates a side wall of the corresponding first sub-winding member 11 facing the other first sub-winding member 11 to form an avoidance opening 11c. The avoidance opening 11c communicates with the fitting opening 11b.

The first winding member 1 is provided with the second winding members 2 on two sides in the up-down direction respectively. Each second winding member 2 includes two second sub-winding members 21 spaced apart along the left-right direction. The two second sub-winding members 21 are disposed on the left and right sides of the centerline L2 respectively, so that the spacing region between the two second sub-winding members 21 is directly opposite the spacing region between the two first sub-winding members 11 in the up-down direction. Each second sub-winding member 21 are movable relative to the first sub-winding member 11 in the cross-section of the winding member assembly 10 along the up-down direction, so that the winding member assembly 10 may switch between a first state and a second state. In the first state, an outer peripheral wall of each second sub-winding member 21 and an outer peripheral wall of each first sub-winding member 11 are in the same preset cylindrical surface, and each second sub-winding member 21 is located outside the first sub-winding member 11. In the second state, at least part of each second sub-winding member 21 extends into the accommodating cavity 11a of the corresponding first sub-winding member 11 through the corresponding fitting opening 11b and avoidance opening 11c, and each second sub-winding member 21 is located inside the preset cylindrical surface. In this case, the width of the winding member assembly 10 in the second state in the up-down direction is smaller than the width of the winding member assembly 10 in the first state in the up-down direction.

The preset cylindrical surface is a cylindrical surface, and the outer peripheral wall of each second sub-winding member 21 and the outer peripheral wall of each first sub-winding member 11 are arc surfaces.

Two clamping pieces 4 are provided and the two clamping pieces 4 are arranged in sequence along the left-right direction. Each clamping piece 4 is disposed in the corresponding mounting groove 11d. The two clamping pieces 4 are movable relative to each other to clamp the winding material 30, so that the winding material 30 can be threaded through the spacing space between the two second sub-winding members 21 to the spacing space between the two first sub-winding members 11 and clamped by the clamping pieces 4.

The winding member assembly 10 winds the electrode assembly. The winding material 30 is threaded between the two first sub-winding members 11 through the spacing region between the two second sub-winding members 21 and clamped by the two clamping pieces 4. The winding member assembly 10 switches to the first state (no switching is needed if the winding member assembly 10 is already in the first state, or switching is performed if the winding member assembly 10 is not in the first state), and the winding member assembly 10 rotates around its central axis L1 to achieve winding of the winding material 30. For example, the separator is threaded between the two first sub-winding members 11 through the spacing region between the two second sub-winding members 21 and clamped by the two clamping pieces 4; then electrode sheets are fed; and the winding member assembly 10 rotates to wind the separator and the electrode sheets on the preset cylindrical surface.

After the winding material 30 is wound to a certain length, the winding member assembly 10 stops rotating. Each second winding member 2 moves along the up-down direction toward a direction close to the first winding member 1, to switch the winding member assembly 10 to the second state, reducing the width of the winding member assembly 10 in the up-down direction. In this case, each second sub-winding member 21 is accommodated in the accommodating cavity 11a of the corresponding first sub-winding member 11 through the corresponding fitting opening 11b and the corresponding avoidance opening 11c. Further, the two first sub-winding members 11 move away from each other along the left-right direction to stretch the winding material 30, so as to flatten the winding material 30 for the first time, where the upper part of the winding material 30 basically abuts against the upper side wall of the first winding member 1, and the lower part of the winding material 30 basically abuts against the lower side wall of the first winding member 1.

Then, the inner clamping members 6 of the two unloading assemblies 20 fit the grooves 11e of the two first sub-winding members 11 respectively. The outer clamping members 7 move to the outer side of the winding material 30. The outer clamping member 7 and the corresponding inner clamping member 6 clamp the winding material 30. The winding member assembly 10 is withdrawn to achieve separation of the winding member assembly 10 from the winding material 30. The two unloading assemblies 20 move away from each other to flatten the winding material 30 for the second time. During the above process, the winding member assembly 10 may be restored to an initial winding state for the next winding process.

In the above technical solution, before removing the winding material 30 from the winding member assembly 10, the winding member assembly 10 may stretch the winding material 30 once to reduce the suspension height of the upper part of the winding material 30 when the winding member assembly 10 is withdrawn from the winding material 30, reducing the risk of collapse of the upper part of the winding material 30, reducing the risk of reliability issues such as wrinkling and breakage of the electrode sheets caused by collapse of the winding material 30, facilitating subsequent shaping of the winding material 30, and improving the use reliability and safety of the winding material 30.

It should be noted that, in the case of no conflict, the embodiments in this application and the features in the embodiments can be combined with each other.

The above embodiments are only preferred embodiments of this application and do not limit this application. For those skilled in the art, various changes and modifications may be made to this application. Any modifications, equivalent replacements, improvements, and the like made within the spirit and principles of this application should be included in the protection scope of this application.

## Claims

1. A winding member assembly, comprising:
a first winding member, wherein the first winding member comprises two first sub-winding members oppositely disposed along a first direction and movable relative to each other along the first direction, each of the first sub-winding members has an accommodating cavity formed inside, and the accommodating cavity penetrates two side walls of the first sub-winding member in a second direction to form fitting openings respectively; and
a second winding member, wherein the first winding member is provided with second winding members on two sides along the second direction respectively, each of the second winding members is movable relative to the first sub-winding member, and the winding member assembly is configured to switch between a first state and a second state; wherein
in the first state, an outer peripheral wall of the second winding member and an outer peripheral wall of the first sub-winding member are in a same preset cylindrical surface; in the second state, the second winding member is located inside the preset cylindrical surface and at least part of the second winding member extends into the accommodating cavity through the corresponding fitting opening, so that a width of the winding member assembly in the second state in the second direction is smaller than a width of the winding member assembly in the first state in the second direction; and the first direction, the second direction, and an axial direction of the winding member assembly are perpendicular to each other.

2. The winding member assembly according to claim 1, wherein in the first state, the second winding member is located outside the first sub-winding member.

3. The winding member assembly according to claim 1 or 2, wherein at least one of the second winding members comprises two second sub-winding members spaced apart along the first direction; wherein
in the first state, an outer peripheral wall of the second sub-winding member and an outer peripheral wall of the first sub-winding member both are in the preset cylindrical surface; and in the second state, at least part of the second sub-winding member extends into the corresponding accommodating cavity, so that the second sub-winding member is located inside the preset cylindrical surface.

4. The winding member assembly according to claim 3, wherein a side wall of at least one of the first sub-winding members facing the other first sub-winding member is formed with an avoidance opening; and the avoidance opening communicates with the accommodating cavity and the two corresponding fitting openings, suitable for avoiding the corresponding second sub-winding member.

5. The winding member assembly according to claim 3 or 4, wherein a partition is provided in the accommodating cavity; the partition is connected to two opposite side walls of the accommodating cavity, to divide the accommodating cavity into two chambers arranged in sequence along the second direction; and the two chambers correspond to the two second winding members respectively.

6. The winding member assembly according to any one of claims 3 to 5, wherein the winding member assembly has a centerline extending along the second direction;
the two first sub-winding members are disposed on two sides of the centerline in the first direction respectively; and/or
the two second sub-winding members of at least one of the second winding members are disposed on the two sides of the centerline in the first direction respectively.

7. The winding member assembly according to any one of claims 1 to 6, wherein the winding member assembly further comprises:
two oppositely disposed clamping pieces, wherein the two clamping pieces are movable relative to each other to clamp a winding material, and the two clamping pieces are disposed correspondingly on the two first sub-winding members respectively.

8. The winding member assembly according to any one of claims 1 to 7, wherein outer peripheral walls of the two first sub-winding members are disposed in opposite directions, an outer peripheral wall of each of the first sub-winding members is formed with a groove, grooves of the two first sub-winding members are disposed in opposite directions along a radial direction of the winding member assembly.

9. The winding member assembly according to any one of claims 1 to 8, wherein the second winding member moves in a cross-section of the winding member assembly to switch the winding member assembly between the first state and the second state.

10. The winding member assembly according to claim 9, wherein at least one of the second winding members is movable relative to the first winding member along the second direction.

11. The winding member assembly according to claim 10, wherein multiple second states from a first gear to an Nth gear are set; and from the first gear to the Nth gear, the width of the winding member assembly in the second direction decreases.

12. A winding device, comprising:
a winding member assembly, wherein the winding member assembly is the winding member assembly according to any one of claims 1 to 11;
a first driving mechanism, wherein the first driving mechanism is configured to drive the winding member assembly to rotate around a central axis of the winding member assembly; and
a second driving mechanism, wherein the second driving mechanism is configured to drive at least one of the first sub-winding members to move along the first direction.

13. The winding device according to claim 12, wherein in the first state, the second winding member is located outside the first sub-winding member; and
the winding device further comprises:
a third driving mechanism, wherein the third driving mechanism is configured to drive the second winding member to move relative to the first winding member along the second direction, to switch the winding member assembly between the first state and the second state.

14. A winding method, wherein a winding member assembly comprises a first winding member and a second winding member, the first winding member comprises two first sub-winding members oppositely disposed along a first direction and movable relative to each other along the first direction, each of the first sub-winding members has an accommodating cavity formed inside, the accommodating cavity penetrates two side walls of the first sub-winding member in a second direction to form fitting openings respectively, the first winding member is provided with second winding members on two sides along the second direction respectively, each of the second winding members is movable relative to the first sub-winding member, and the winding member assembly is configured to switch between a first state and a second state;
in the first state, an outer peripheral wall of the second winding member and an outer peripheral wall of the first sub-winding member are in a same preset cylindrical surface; in the second state, the second winding member is located inside the preset cylindrical surface and at least part of the second winding member extends into the accommodating cavity through the corresponding fitting opening, so that a width of the winding member assembly in the second state in the second direction is smaller than a width of the winding member assembly in the first state in the second direction; and the first direction, the second direction, and an axial direction of the winding member assembly are perpendicular to each other; and
the winding method comprises:
winding, by the winding member assembly, a winding material in the first state until a preset condition is satisfied; stretching, by the winding member assembly, the winding material at least once; and during the stretching, switching, by the winding member assembly, to the second state and increasing a distance between the two first sub-winding members in the first direction.
